# EUROPEAN PATENT APPLICATION

(11) **EP 4 837 771 A1**
(43) Date of publication of application: **11.11.2026**
(21) Application number: 25174791.1
(22) Date of filing: 07.05.2025
(51) Int. Cl.: B60L 15/20, B60L 15/32, B60L 50/60, B60T 8/17, B62D 59/04

(54) **CONTROLLING AN ELECTRIC TRAILER OF A VEHICLE COMBINATION**

(71) Applicant: Volvo Truck Corporation, 405 08 Göteborg (SE)
(72) Inventor: GELSO, Esteban, 421 51 VÄSTRA FRÖLUNDA (SE); SADEGHI KATI, Maliheh, 433 51 ÖJERSJÖ (SE)
(74) Representative: Kransell & Wennborg KB

(57) **Abstract**

A computer system (100) configured to control at least one trailer (5) in a vehicle combination (1), the trailer comprising an electric drivetrain (6), the vehicle combination comprising a towing vehicle (3) and the trailer, wherein the computer system comprises one or more processing circuitry (102, 102a, 102b) configured to: determine a longitudinal acceleration (a) of the vehicle combination over a given time period; determine, based on the determined longitudinal acceleration, an operational region of the vehicle combination, the operational region being one of a plurality of predefined operational regions (72, 74, 76), the plurality of predefined operational regions comprising: a steady-state operational region (72), in which the longitudinal acceleration is within a predefined threshold range (a72) centered around zero acceleration; a dynamic operational region (74), in which the longitudinal acceleration is outside the predefined threshold range; a transitional operational region (76); determine, based on the determined operational region, a set of control limits (80) for controlling at least one of propulsion and braking of the trailer, the set of control limits comprising at least one of a set of power limits, a set of torque limits, and a set of force limits; and restrict at least one of propulsion and braking of the trailer in accordance with the determined set of control limits.

## Description

### TECHNICAL FIELD

The disclosure relates generally to a vehicle combination comprising a towing vehicle and at least one trailer with an electric drivetrain. In particular aspects, the disclosure relates to restricting at least one of propulsion and braking of a trailer of a vehicle combination. The disclosure can be applied to heavy-duty vehicles, such as trucks, buses, and construction equipment, in particular configured for pulling a trailer using an articulated joint, among other vehicle types. Although the disclosure may be described with respect to a particular vehicle, the disclosure is not restricted to any particular vehicle.

### BACKGROUND

Hybrid or fully electric trailer configurations, including combinations of internal combustion engine (ICE) or battery-electric trucks with electric trailers (e-trailers), are gaining interest due to their potential to improve operational efficiency and reduce emissions in the transportation sector. These combinations introduce new integration challenges, particularly regarding compatibility across vehicle types and digital communication protocols. In practice, varying levels of connectivity between towing vehicles and e-trailers can impact the coordination of propulsion and braking functions. It may therefore be desirable to provide for improved control of the trailer in a manner that ensures safe and efficient operation under varying vehicle and connectivity conditions.

### SUMMARY

According to a first aspect of the disclosure, there is provided a computer system configured to control at least one trailer in a vehicle combination. The vehicle combination comprises a towing vehicle and the trailer. The trailer comprises an electric drivetrain. The computer system comprises one or more processing circuitry configured to determine a longitudinal acceleration of the vehicle combination over a given time period; determine, based on the determined longitudinal acceleration, an operational region of the vehicle combination, the operational region being one of a plurality of predefined operational regions, the plurality of predefined operational regions comprising: a steady-state operational region, in which the longitudinal acceleration is within a predefined threshold range centered around zero acceleration; a dynamic operational region, in which the longitudinal acceleration is outside the predefined threshold range; a transitional operational region, in which the longitudinal acceleration transitions between the steady-state operational region and the dynamic operational region; determine, based on the determined operational region, a set of control limits for controlling at least one of propulsion and braking of the trailer, the set of control limits comprising at least one of a set of power limits, a set of torque limits, and a set of force limits; and restrict at least one of propulsion and braking of the trailer in accordance with the determined set of control limits.

The first aspect of the disclosure may seek to improve the control of propulsion and braking contributions of an electrically powered trailer by dynamically adapting the operation of the trailer to the current or anticipated longitudinal acceleration of the vehicle combination. More specifically, the disclosure may provide a computer system configured to select and transmit a set of power, torque, or force limits to the trailer based on predefined operational regions, thereby enabling reliable, adaptive, and safe trailer behavior even under varying or challenging driving conditions.

A technical benefit may include enhanced stability and energy efficiency for a combination vehicle with a towing vehicle and a trailer. By dynamically adjusting operational control limits to the trailer in response to vehicle dynamics, the computer system may enable improved synchronization between the towing vehicle and trailer, providing a more responsive and robust control. The computer system may also contribute to enhanced mass estimation accuracy for vehicle combinations comprising an electrically powered trailer. Additional benefits may include safer transitions between operational states, more reliable predictive control, and improved adaptability to real-world driving environments.

The disclosure is at least partly based on the insight that operating an electrically powered trailer in a vehicle combination poses challenges in achieving precise and safe control, particularly under dynamically changing conditions. Limited adaptation of trailer propulsion and braking parameters, and/or insufficient or delayed digital communication between the towing vehicle and the trailer, may impair overall vehicle stability, reduce energy efficiency, and negatively affect functions such as mass estimation, predictive control, and vehicle stability systems. These factors present technical challenges in achieving reliable and efficient trailer operation in dynamic operating environments.

Optionally in some examples, including in at least one preferred example, the operational regions may be subsets of an overall longitudinal acceleration range for the vehicle combination.

Optionally in some examples, including in at least one preferred example, the one or more processing circuitry may be configured to determine the operational region by determining that the determined longitudinal acceleration falls: within the predefined threshold range centered around zero acceleration, wherein the operational region is the steady-state operational region; outside the predefined threshold range, wherein the operational region is the dynamic operational region; or in a transition zone between the steady-state and dynamic operational regions, wherein the operational region is the transitional operational region. A technical benefit may include enabling an improved classification of vehicle operating states based on longitudinal acceleration, which supports robust control logic and ensures that appropriate propulsion and braking strategies are applied in steady-state, dynamic, and transitional driving conditions.

Optionally in some examples, including in at least one preferred example, the set of control limits may be based on at least one of: a proportion of friction forces acting on the trailer, a proportion of gravitational forces acting on the trailer; coupling forces between the towing vehicle and the trailer; and a measured articulation angle between the towing vehicle and the trailer. A technical benefit may include improved contextual adaptation of control limits by accounting for physical interaction forces acting on the trailer, thereby enhancing the accuracy and responsiveness of trailer control under varying load, varying road conditions, such as varying slope, varying coupling conditions, and/or varying weather conditions. The proportion of friction forces acting on the trailer may refer to any one of the proportion of friction forces acting on the trailer as distributed per wheel axis and proportion of friction forces acting on the trailer as distributed per wheel. The proportion of gravitational forces acting on the trailer may refer to any one of the proportion of gravitational forces acting on the trailer as distributed per wheel axis and proportion of gravitational forces acting on the trailer as distributed per wheel.

Optionally in some examples, including in at least one preferred example, the set of control limits may further be constrained based on data indicative of actuator capabilities of the trailer. A technical benefit may include enabling that the applied control limits are compatible with the mechanical and electrical capabilities of the trailer's actuators, thereby avoiding performance saturation or control errors and supporting safe system operation.

Optionally in some examples, including in at least one preferred example, the at least one of propulsion and braking of the trailer may be restricted in accordance with the determined set of control limits and further constrained based on any one of a brake request and a stability intervention. A technical benefit may include enabling coordinated intervention between the trailer's control logic and higher-level vehicle functions such as braking requests or stability control actions, thereby improving overall vehicle safety and responsiveness in various scenarios.

Optionally in some examples, including in at least one preferred example, when the determined operational region is the dynamic operational region, the set of control limits may be further defined based on a current longitudinal speed of the vehicle combination. A technical benefit may include dynamic scaling of control limits based on current vehicle speed, allowing more refined and speed-sensitive modulation of trailer propulsion and braking forces, especially during rapid acceleration or deceleration events.

Optionally in some examples, including in at least one preferred example, the set of control limits may further be defined based on a mass estimation of the vehicle combination. Typically, the set of control limits are selected such that an effect of the trailer on the mass estimation is reduced, e.g. such that an error of the estimated mass is within a mass error threshold. A technical benefit may include alignment of trailer control behavior with the estimated mass of the vehicle combination, enhancing consistency with vehicle dynamics models and improving predictive control performance and energy efficiency.

Optionally in some examples, including in at least one preferred example, when the determined operational region is the dynamic operational region, the set of control limits may further be defined based on at least one of the following: maximum and minimum force values; maximum and minimum power values; and maximum and minimum torque values, such that a contribution of a trailer force to a mass estimation of the vehicle combination remains below a predefined threshold. A technical benefit may include bounding the contribution of trailer forces to mass estimation processes, thereby maintaining the accuracy of mass estimation and preventing estimation errors that could impair other vehicle functions such as energy management or stability control.

Optionally in some examples, including in at least one preferred example, a combination of control limits for the steady-state operational region and the dynamic operational region may be determined and applied during the transitional operational region. A technical benefit may include smooth transitions between control modes during changes in acceleration states, which improves driving comfort and control continuity by avoiding abrupt shifts in trailer behavior. Such a configuration may also further reduce stress and wear on the electric drivetrain and the coupling between the towing vehicle and the trailer.

Optionally in some examples, including in at least one preferred example, the one or more processing circuitry may further be configured to receive a measure of a parameter related to at least one of lateral-yaw motion and road condition, and to modify the predefined threshold range based on the received measure of the parameter. A technical benefit may include adaptive adjustment of acceleration thresholds based on lateral-yaw behavior or road surface condition, allowing more accurate operational region classification under driving scenarios such as lane changes and hilly roads.

Optionally in some examples, including in at least one preferred example, the one or more processing circuitry may further be configured to restrict at least one of propulsion and braking of the trailer by restricting a rate of change of a requested power or force from the trailer. A technical benefit may include suppression of rapid fluctuations in requested trailer output, reducing oscillations or instability and improving the robustness of control execution under steady or low-dynamic driving conditions.

Optionally in some examples, including in at least one preferred example, the one or more processing circuitry may be configured to restrict at least one of propulsion and braking of the trailer by using a low-pass filter to restrict a rate of change of a requested power or force from the trailer.

Optionally in some examples, including in at least one preferred example, the one or more processing circuitry may further be configured to transmit the determined set of control limits to the trailer. A technical benefit may include enabling a modular or distributed control architecture, where the set of control limits may be calculated by a central processing unit (e.g., in the towing vehicle) and transmitted to a decentralized unit (e.g., a trailer controller 100b), thereby facilitating scalable integration across mixed vehicle configurations. This may also support backward compatibility with existing trailer control modules and may enhance flexibility in managing actuation locally or remotely.

Optionally in some examples, including in at least one preferred example, the one or more processing circuitry may be provided in the form of a towing vehicle processing circuitry and a trailer processing circuitry, wherein the towing vehicle processing circuitry is configured to transmit the determined set of control limits to the trailer processing circuitry, and the trailer processing circuitry is configured to receive the determined set of control limits, and to restrict at least one of propulsion and braking of the trailer in accordance with the transmitted determined set of control limits. A technical benefit may include distributed control execution between the towing vehicle and the trailer, enabling modular system design, reducing communication burden, and supporting scalable control architectures for vehicle combinations with varying trailer types. Typically, the trailer processing circuitry may be configured to be in communication with the electric drivetrain of the trailer.

Optionally in some examples, including in at least one preferred example, the towing vehicle processing circuitry may be further configured to determine the operational region of the vehicle combination in response to receiving a request from the trailer processing circuitry. A technical benefit may include enabling trailer-initiated region detection by allowing the trailer to request operational classification from the towing vehicle, improving responsiveness and enabling trailer autonomy in hybrid communication setups.

Optionally in some examples, including in at least one preferred example, the trailer processing circuitry may be further configured to determine a limitation or disruption in the digital communication between the towing vehicle and the trailer, and to control the trailer based on a currently selected set of control limits. A technical benefit may include resilience to communication faults by allowing the trailer to fall back on a previously selected control mode, thereby maintaining safe and predictable trailer behavior even when digital communication is temporarily impaired. Hence, another technical advantage may include selecting and maintaining a set of control limits to ensure stability of the vehicle combination in the event of limited or no digital communication between the towing vehicle and the trailer.

The computer system according to examples of the present disclosure may advantageously be included in a vehicle combination.

Optionally in some examples, including in at least one preferred example, the vehicle combination may comprise a towing vehicle, a trailer having an electric drivetrain, and the computer system. The electric drivetrain may be configured to provide propulsion power to the trailer.

Optionally in some examples, including in at least one preferred example, the towing vehicle may comprise a coupling arrangement for articulated coupling of the trailer to the towing vehicle.

Optionally in some examples, including in at least one preferred example, the vehicle combination may comprise the towing vehicle and a plurality of trailers, each trailer having an electric drivetrain.

According to a second aspect of the disclosure, there is provided a computer-implemented method for controlling at least one trailer in a vehicle combination, the vehicle combination comprising a towing vehicle and the trailer, the trailer comprising an electric drivetrain, the method comprising: determining a longitudinal acceleration of the vehicle combination over a given time period; determining, based on the determined longitudinal acceleration, an operational region of the vehicle combination, the operational region being one of a plurality of predefined operational regions, the plurality of predefined operational regions comprising: a steady-state operational region, in which the longitudinal acceleration is within a predefined threshold range centered around zero acceleration, a dynamic operational region, in which the longitudinal acceleration is outside the predefined threshold range, a transitional operational region, in which the longitudinal acceleration transitions between the steady-state operational region and the dynamic operational region; determining, based on the determined operational region, a set of control limits for controlling at least one of propulsion and braking of the trailer, the set of control limits comprising at least one of a set of power limits, a set of torque limits, and a set of force limits; and restricting at least one of propulsion and braking of the trailer in accordance with the determined set of control limits.

The second aspect of the disclosure may seek to improve the control of propulsion and braking contributions of an electrically powered trailer by dynamically adapting the operation of the trailer to the current or anticipated longitudinal acceleration of the vehicle combination. More specifically, the disclosure may provide a computer system configured to determine a set of control limits, such as power, torque, or force limits for the trailer based on predefined operational regions, thereby enabling reliable, adaptive, and safe trailer behavior even under varying or challenging driving conditions.

A technical benefit may include enhanced stability and energy efficiency for a combination vehicle with a towing vehicle and a trailer. By dynamically determining operational control limits to the trailer in response to vehicle dynamics, the computer system may enable improved synchronization between the towing vehicle and trailer, providing a more responsive and robust control. The computer system may also contribute to enhanced mass estimation accuracy for vehicle combinations comprising an electrically powered trailer. Additional benefits may include safer transitions between operational states, more reliable predictive control, and improved adaptability to real-world driving environments.

Optionally in some examples, including in at least one preferred example, the method may comprise transmitting the determined set of control limits to the trailer.

Optionally in some examples, including in at least one preferred example, the method may comprise transmitting the determined set of control limits from a towing vehicle processing circuitry to a trailer processing circuitry provided on the trailer. The set of control limits may be transmitted over a digital communication interface.

Optionally in some examples, including in at least one preferred example, the method may comprise controlling the vehicle combination including the towing vehicle and the trailer, in which the set of control limits are used as control commands for controlling the trailer.

According to a third aspect of the disclosure, there is provided a computer program product comprising program code for performing, when executed by the one or more processing circuitry, the method of the second aspect of the disclosure.

According to a fourth aspect of the disclosure, there is provided a non-transitory computer-readable storage medium comprising instructions, which when executed by the one or more processing circuitry, cause the one or more processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle combination according to an example.
**FIG. 2** is an exemplary computer system according to an example.
**FIG. 3** is an illustration of an exemplary diagram, showing one or more sets of control limits to restrict the trailer output, according to an example.
**FIG. 4** is an illustration of an exemplary diagram, showing an application of a set of control limits used in a determined dynamic operational region, according to an example.
**FIG. 5** is an illustration of an exemplary diagram, showing how trailer propulsion force, trailer propulsion power, and longitudinal acceleration may evolve over time, according to an example.
**FIGS. 6A-6B** are exemplary methods according to examples.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure relates to a computer-based control system for coordinating propulsion and braking in a vehicle combination, particularly between a towing vehicle and an electrically powered trailer in hybrid or battery-electric truck-trailer configurations. The disclosure is at least partly based on the insight that the integration of electrically powered trailers (e-trailers) into vehicle combinations comprising internal combustion engine (ICE) trucks and/or battery-electric trucks (BEV) offers potential for improving operational efficiency and sustainability. However, challenges may arise due to compatibility issues between towing vehicles and trailers, particularly with respect to limited, absent, or faulty digital communication based on different tractor-trailer communication protocols. In such cases, the lack of precise coordination between the towing vehicle and the electrically powered trailer, particularly regarding propulsion and braking torque control, may impair vehicle stability, energy efficiency, mass estimation accuracy, predictive control strategies, and existing stability control systems. This may present technical challenges regarding safe and efficient operation of vehicle combinations, especially when the trailer operates its own electric drivetrain partially independently of the towing vehicle.

Accordingly, the computer systems and methods of the disclosure seek to improve the adaptive control of the propulsion and braking contributions of an electrically powered trailer in a vehicle combination, even in the presence of limited or degraded communication between the towing vehicle and the trailer. More specifically, the disclosure may seek to provide a computer system configured to dynamically determine a longitudinal acceleration of the vehicle combination, classify the acceleration into predefined operational regions (including steady-state, dynamic, and transitional operational regions), and based on the determined operational region, determine a set of control limits for restricting propulsion, such as power, and/or braking of the trailer. By way of example, the computer system may be configured to determine different types of control limits for different operational regions, such as a first set of control limits and a second set of control limits. By applying a first set of limits during steady-state conditions and a second set during dynamic conditions, and managing transitions between the two, the computer system provides a safe, stable, and energy-efficient operation of the trailer without disrupting important towing vehicle functionalities such as mass estimation or stability control.

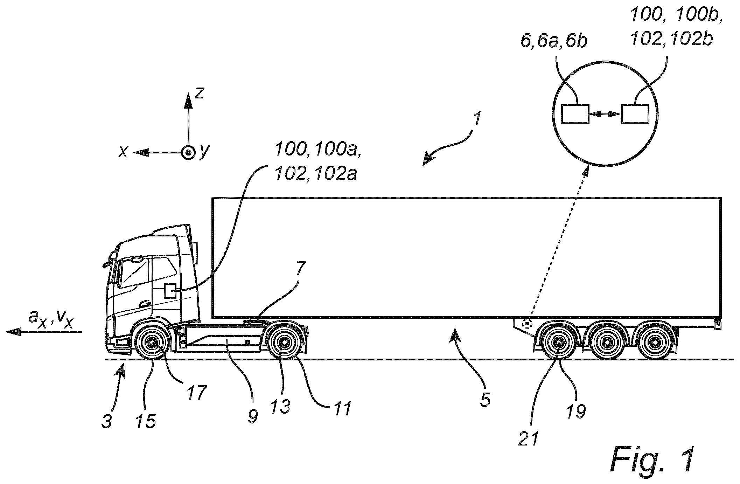

A technical benefit may include providing enhanced control, adaptability, and integration of electrically powered trailers within mixed or legacy fleets, regardless of the quality or availability of direct digital communication. The ability to apply sets of control limits based on operational regions provides smooth transition handling, improves energy efficiency through enhanced use of the electric drivetrain, and supports broader deployment of electrified trailers in existing vehicle fleets. By dynamically determining and transmitting control limits based on longitudinal acceleration, the computer system may further enhance propulsion and braking control of the trailer. By dynamically determining and transmitting control limits based on additional driving conditions, including not only longitudinal acceleration, but also at least one or more of vehicle speed, weather condition, road grade, and road surface conditions, the computer system may further enhance propulsion and braking control of the trailer. Additional benefits include maintaining or improving the accuracy of mass estimation used in predictive and stability systems, reducing energy loss, increasing system robustness in the event of communication faults, and enhancing overall safety and efficiency during operation. One or more examples of computer systems, methods, and vehicles according to the present disclosure will now be further described in relation to Figs. 1 to 7.

Fig. 1 is an exemplary vehicle combination according to an example. The vehicle combination 1 is here a truck-trailer vehicle combination. The vehicle combination 1 comprises a towing vehicle 3 and a trailer 5. As used herein, the term "towing vehicle" refers to any powered vehicle unit that pulls or controls a trailer, and may include, for example, a tractor in a tractor-trailer configuration. Referring to Fig. 1, the towing vehicle 3 is illustrated as a tractor. The trailer 5 is coupled to the towing vehicle 3. In the example in Fig. 1, the trailer 5 is a semitrailer that is coupled to the towing vehicle 3 by means of a fifth-wheel coupling 7. In this example, the towing vehicle 3 comprises an electric drivetrain 9. The electric drivetrain typically comprises one or more electric machines and one or more energy storage systems, such as one or more battery packs. The towing vehicle 3 is thus a towing electric vehicle. In other examples, the towing vehicle 3 may be operated by other power systems, such as an internal combustion engine, a fuel cell system and the like. Hence, the towing vehicle 3 may comprise one or more propulsion systems of different kinds. As is indicated in Fig. 1, the towing vehicle 3 has driving wheels 11 on a rear drive axle 13, and front wheels 15 on a front axle 17. The towing vehicle 3 may have different types of configurations, including e.g. one or more additional drive axles.

The trailer 5 has wheels 19 on at least one trailer axle 21. The trailer 5 typically comprise a number of trailer axles 21, each axle 21 having a pair of wheels 19. Moreover, the trailer 5 comprises an electric drivetrain 6. In the context of the present disclosure, the term "trailer" refers to a vehicle unit configured to be coupled to a towing vehicle and comprising an electric drivetrain. The trailer 5 is capable of providing propulsive force by means of the electric drivetrain 6, optionally in coordination with the propulsion system of the towing vehicle 3, such as the electric drivetrain 9.

The trailer 5 may also be configured to recuperate energy during motion, such as through regenerative braking. The electric drivetrain 6 may be integrated within the trailer structure or arranged externally as a modular unit, and may comprise at least one electric machine, associated power electronics, and optionally an energy storage system, such as a battery pack and/or supercapacitor. In Fig. 1, the electric drivetrain 6 comprises an electric machine 6a and a battery pack 6b.

Fig. 1 shows one example of a combination vehicle 1 having a fifth-wheel coupling 7 for articulated coupling between the towing vehicle 3 and a trailer in the form of a semitrailer 5. It should be noted that the present disclosure relates to other combination vehicles with other configurations, such as other articulated joints and/or other trailers.

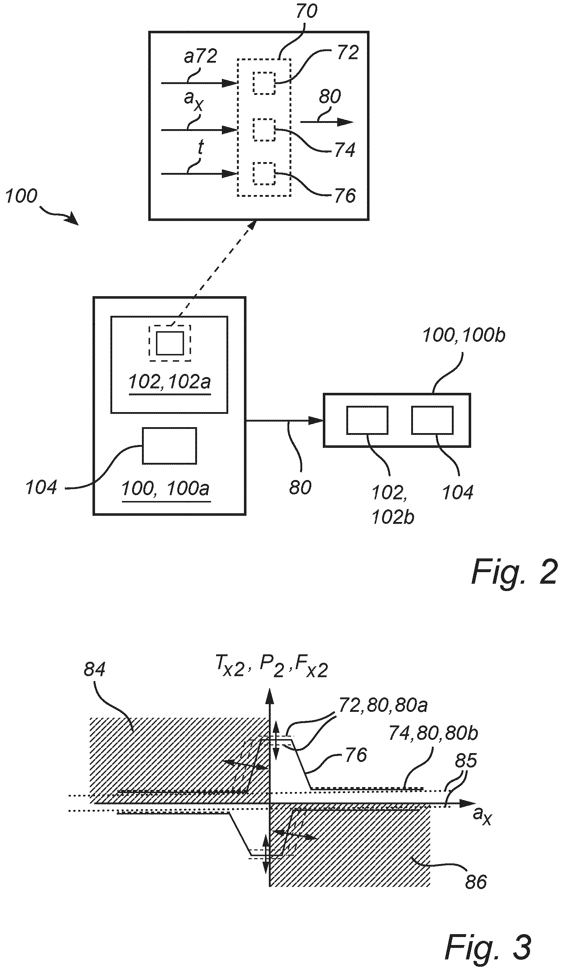

Moreover, the vehicle combination 1 comprises a computer system 100. The computer system 100 comprises one or more processing circuitry units 102, 102a, 102b. The computer system 100 is configured to control the trailer 5, and typically also the vehicle combination 1, wherein the computer system 100 is configured to control both the towing vehicle 3 and the trailer 5. In the present example, illustrated in Fig. 2, the processing circuitry 102a is arranged in the towing vehicle 3, and the processing circuitry 102b is arranged in the trailer 5. For example, the computer system 100 may comprise a towing vehicle controller 100a including the processing circuitry 102a and a trailer controller 100b including the processing circuitry 102b. The processing circuitry 102b is configured to control the electric drivetrain 6 and to communicate with the processing circuitry 102a. In the following examples, the configuration of the computer system 100 will be described with reference to this embodiment, in which the one or more processing circuitry are provided in the form of a towing vehicle processing circuitry 102a and a trailer processing circuitry 102b.

In other examples, the computer system 100 may alternatively be a centralized computer system arranged entirely in the towing vehicle 3; a centralized computer system arranged entirely in the trailer 5; a distributed computer system with primary control functionality located in the trailer 5 and secondary functionality in the towing vehicle 3; or a distributed computer system with primary control functionality located in the towing vehicle 3 and secondary functionality in the trailer 5. Accordingly, it should be noted that the computer system 100 need not necessarily be included in the towing vehicle 3, but that it may be at least partly included in another part of the vehicle combination 1, or partly or wholly included in a cloud solution, so that processing by the processing circuitry 102 may be performed remotely from the towing vehicle 3. If included in the towing vehicle 3, the computer system 100 may be provided in the form of a centralized vehicle control unit, or as (a part of) a distributed vehicle control system, which may, for example, include a vehicle motion management control unit and/or a braking system control unit. The trailer 5 may include corresponding trailer motion management control unit and/or a braking system control unit.

The communication between the towing vehicle processing circuitry 102a and the trailer processing circuitry 102b may be established via a digital communication link. The communication link may be implemented using any suitable vehicle interface standard or protocol, including but not limited to Controller Area Network (CAN), FlexRay, Ethernet-based communication, or dedicated powerline or wireless communication channels. In some examples, the communication is performed over an existing tractor-trailer interface conforming to a standardized communication protocol, while in other embodiments, a proprietary or supplementary interface may be used. The communication may be continuous or event-triggered and may support bi-directional data exchange, including the transmission of control limits, status data, operational region classifications, actuator states, sensor values, and fallback mode activations. In certain examples, a communication abstraction layer may be employed to ensure compatibility across different tractor-trailer interface versions or vendors.

Fig. 2 shows an exemplary computer system 100 according to an example. The computer system 100 is configured to control the trailer 5, as described herein. The computer system 100 is also configured to control the towing vehicle 3, as is per se known. In Fig. 2, a configuration of the computer system 100 will be described in which the one or more processing circuitry 102 are provided in the form of the towing vehicle processing circuitry 102a and the trailer processing circuitry 102b. Accordingly, in Fig. 2, the vehicle combination 1 comprises the computer system 100. The computer system 100 may be coupled to a vehicle motion management controller of the towing vehicle 3, and may receive and transmit control commands, instructions and signals as described herein.

In Fig. 2, the processing circuitry 102, 102a, 102b are configured to determine a longitudinal acceleration aₓ of the vehicle combination 1 over a given time period t. Moreover, the processing circuitry 102, 102a, 102b are configured to determine, based on the determined longitudinal acceleration aₓ, an operational region 72, 74, 76 of the vehicle combination 1. The operational region 72, 74, 76 is here one of a plurality of predefined operational regions 72, 74, 76. The plurality of predefined operational regions 72, 74, 76 comprises a steady-state operational region 72, in which the longitudinal acceleration aₓ is within a predefined threshold range a72 centered around zero acceleration; a dynamic operational region 74, in which the longitudinal acceleration aₓ is outside the predefined threshold range; and a transitional operational region 76, in which the longitudinal acceleration aₓ transitions between the steady-state operational region 72 and the dynamic operational region 74. In addition, the processing circuitry 102, 102a, 102b are configured to determine, based on the determined operational region, a set of control limits 80 for controlling at least one of propulsion and braking of the trailer 5. The set of control limits 80 comprises at least one of a set of power limits, a set of torque limits, and a set of force limits. Moreover, the processing circuitry 102, 102a, 102b are configured to restrict at least one of propulsion and braking of the trailer 5 in accordance with the determined set of control limits 80.

In one example, the set of control limits 80 is determined in the towing vehicle processing circuitry 102a, and then transmitted to the trailer processing circuitry 102b. Accordingly, in such an example, the processing circuitry 102a is configured to determine the longitudinal acceleration aₓ of the vehicle combination 1 over the given time period t. Moreover, the processing circuitry 102a is configured to determine, based on the determined longitudinal acceleration aₓ, the operational region 72, 74, 76 of the vehicle combination 1. The operational region 72, 74, 76 is here one of a plurality of predefined operational regions 72, 74, 76, the plurality of predefined operational regions comprising a steady-state operational region 72, in which the longitudinal acceleration is within the predefined threshold range a72 centered around zero acceleration; the dynamic operational region 74, in which the longitudinal acceleration aₓ is outside the predefined threshold range; the transitional operational region 76, in which the longitudinal acceleration aₓ transitions between the steady-state operational region 72 and the dynamic operational region 74. Moreover, the processing circuitry 102a is configured to determine, based on the determined operational region, a set of control limits 80 for controlling at least one of propulsion and braking of the trailer 5. The set of control limits 80 comprises at least one of a set of power limits, a set of torque limits, and a set of force limits. Furthermore, the processing circuitry 102a is configured to transmit the determined set of control limits 80 to the trailer 5, typically in that the set of control limits 80 is transmitted by the towing vehicle processing circuitry 102a to the trailer processing circuitry 102b provided in, or on, the trailer 5. In addition, the processing circuitry 102b is configured to restrict at least one of propulsion and braking of the trailer 5 in accordance with the transmitted determined set of control limits 80.

Fig. 3 illustrates an example of the operation of the computer system 100 using the control limits 80 to restrict the trailer output, such as torque, power, or force. Fig. 3 also shows how the trailer output is varied as a function of the longitudinal acceleration aₓ of the vehicle combination 1. As used herein, the term "longitudinal acceleration" refers to the rate of change of the vehicle combination's velocity along its forward-rearward axis, i.e., in the direction of travel. Positive longitudinal acceleration indicates propulsion (increasing speed), while negative longitudinal acceleration corresponds to braking or deceleration (reducing speed).

Moreover, Fig. 3 illustrates how transitions between different operational regions 72, 74, 76 are managed to enhance vehicle stability, powertrain efficiency, and control robustness.

The vertical axis Y in Fig. 3 represents the magnitude of the trailer output, which may correspond to trailer torque T_{X2}, trailer propulsion power P₂, or trailer longitudinal force F_{X2}. The horizontal axis X represents the longitudinal acceleration aₓ of the vehicle combination 1. A central region around aₓ = 0 defines the steady-state operational region 72, within which the vehicle combination 1 is operating at or near constant speed. In this region, a first set of control limits 80a is applied, allowing broader bounds for trailer actuation, including greater degrees of propulsion or braking torque. This enables the trailer 5 to actively contribute to maintaining speed or assisting in mild deceleration under favorable conditions.

As the longitudinal acceleration deviates from the predefined threshold range a72 centered around zero, either positively (vehicle accelerating) or negatively (vehicle decelerating), the computer system 100 determines to enter the dynamic operational region 74, thus the computer system 100 classifies the operation as being within the dynamic operational region 74. In this region, a second set of control limits 80b is applied, comprising more restrictive values to mitigate the risk of destabilizing the vehicle combination 1. Between the steady-state and dynamic operational regions 72, 74 lies the transitional operational region 76, through which the control logic transitions smoothly between the first and second control limit sets 80a, 80b.

Fig. 3 further illustrates two zones 84, 86 denoted as non-preferred e-trailer operating regions. The upper-left region 84 corresponds to conditions in which the vehicle is decelerating while the e-trailer 5 is propelling. This may be tolerated in exceptional cases, such as uphill grade challenges, but is generally avoided due to the risk of destabilizing the vehicle combination 1. Similarly, the lower-right region 86 depicts conditions in which the vehicle is accelerating while the e-trailer 5 is braking, which may be acceptable on steep downhill segments but is likewise non-preferred in typical driving scenarios.

The dashed curve 85 superimposed in the diagram represents a current regulatory proposal, which imposes stepwise restrictions on the trailer output once the longitudinal acceleration aₓ crosses the boundaries of the steady-state operational region 72. By contrast, the proposed computer system 100 enables adaptive, region-aware transitions between control limits 80, allowing for more nuanced regulation of trailer torque or power and better accommodation of real-world operating conditions.

The illustrated behavior of Fig. 3 aligns with the functionality of the processing circuitry 102, 102a, 102b, which is configured to determine the longitudinal acceleration aₓ, assign the vehicle combination 1 to a corresponding operational region 72, 74, 76, and apply the control limits 80, 80a, 80b that are dynamically adapted to that region. In this way, the computer system 100 allows for a smooth and reliable trailer behavior even under changing driving conditions, supporting enhanced stability, energy efficiency, and predictive vehicle control.

Further details of the example in which the computer system 100 comprises the towing vehicle processing circuitry 102a and the trailer processing circuitry 102b, and wherein the set of control limits 80 is determined in the towing vehicle processing circuitry 102a, and subsequently transmitted to the trailer processing circuitry 102b, are described hereinafter. For ease of reference, the towing vehicle processing circuitry 102a will be denoted as the processing circuitry 102a and the trailer processing circuitry 102b as the processing circuitry 102b. The processing circuitry 102b may be implemented as part of the onboard trailer controller 100b.

The processing circuitry 102a is configured to determine a longitudinal acceleration aₓ of the vehicle combination 1 over a given time period t. Determining a longitudinal acceleration aₓ of the vehicle combination 1 over a given time period t can be performed in several manners, which are known per se. In one example, the processing circuitry 102a is configured to determine a current longitudinal acceleration of the vehicle combination 1 over a given time period t. In addition, or alternatively, the processing circuitry 102a is configured to determine a future longitudinal acceleration of the vehicle combination over a given time period t. Accordingly, the processing circuitry 102a may be based on determining the current situation of acceleration or predicting acceleration for a time ahead. In one example, the processing circuitry 102a is configured to determine either a momentary acceleration value or a range of longitudinal acceleration values. The longitudinal acceleration aₓ of the vehicle combination 1 may be measured using one or more suitable sensors, such as accelerometers arranged in the towing vehicle, the trailer, or both. Additionally, longitudinal acceleration aₓ may be derived from other sources, including wheel speed sensors, GPS-based velocity estimators, or integrated vehicle motion sensors. These measurement may be used individually or in combination to ensure reliable acceleration detection under different operational conditions. The given time period t may vary, extending from about a few seconds to a few minutes, or even longer depending on situation. The time t may be measured by a clock or equivalent timing device.

Moreover, the processing circuitry 102a is here configured to determine a plurality of predefined operational regions 72, 74, 76. The predefined operational regions 72, 74, 76 are here subsets of an overall longitudinal acceleration range 70. In particular, the predefined operational regions 72, 74, 76 are subsets of an overall longitudinal acceleration range 70 for the vehicle combination 1. The plurality of predefined operational regions 72, 74, 76 here includes three operational regions with varied operational characteristics for the vehicle combination 1. The first operational region is a steady-state operational region 72, in which the longitudinal acceleration aₓ is within a predefined threshold range a72 centered around zero acceleration. The second operational region is a dynamic operational region 74, in which the longitudinal acceleration aₓ is outside the predefined threshold range a72. The third operational region is a transitional operational region 76, in which the longitudinal acceleration aₓ transitions between the steady-state operational region 72 and the dynamic operational region 74. To this end, the transitional operational region 76 represents a state of the vehicle combination 1 in which the longitudinal acceleration transitions between the steady-state operational region 72 and the dynamic operational region 74.

Accordingly, the processing circuitry 102a is configured to determine a plurality of predefined operational regions comprising the steady-state operational region 72, the dynamic operational region 74, and the transitional operational region 76. The steady-state operational region 72, dynamic operational region 74, and the transitional operational region 76 are here subsets of the overall longitudinal acceleration range 70 for the vehicle combination 1. In one example, the steady-state operational region 72, dynamic operational region 74, and the transitional operational region 76 define the entire range of subsets of the overall longitudinal acceleration range 70. In other examples, the overall longitudinal acceleration range 70 may include other subsets of operational regions. Hence, in some examples, the overall longitudinal acceleration range 70 may at least comprise the steady-state operational region 72, the dynamic operational region 74, and the transitional operational region 76.

Moreover, the processing circuitry 102a is configured to determine that the determined longitudinal acceleration aₓ falls within one of the plurality of predefined operational regions 72, 74, 76. As such, based on the determined longitudinal acceleration aₓ of the vehicle combination 1, the processing circuitry 102a is configured to determine that the determined longitudinal acceleration aₓ falls within at least one of the steady-state operational region 72, in which the determined longitudinal acceleration aₓ is within the predefined threshold range a72 centered around zero acceleration, the dynamic operational region 74, in which the determined longitudinal acceleration aₓ is outside the predefined threshold range a72, or the transitional operational region 76, in which the determined longitudinal acceleration aₓ transitions between the steady-state operational region 72 and the dynamic operational region 74.

It should be noted that the predefined operational regions 72, 74, 76 may typically be predefined operational regions that are stored in a memory 104 (see Fig. 1) of the computer system 100 and used by the processing circuitry 102a during operation of the vehicle combination 1. However, the processing circuitry 102a may also be configured to dynamically update the operational regions 72, 74, 76. Accordingly, it may be sufficient that the processing circuitry 102a is configured to determine, based on the determined longitudinal acceleration, an operational region of the vehicle combination 1, the operational region being one of a plurality of predefined operational regions 72, 74, 76.

The predefined threshold range a72 of the steady-state operational region 72 is typically an acceleration range around zero acceleration. By way of example, the predefined threshold range a72 is an acceleration range between -ao and +ao, where a₀ is a predefined acceleration magnitude. For example, the predefined threshold range a72 is an acceleration range between -ao and +ao, where a₀ is a predefined acceleration magnitude less than e.g. 0.1 m/s². In another example, the predefined threshold range a72 is a threshold range that is dynamically updated during operation of the vehicle combination. The updates may originate from two types of sources, including continuous updates and event-trigger updates. Continuous updates are based on real-time vehicle parameters and driving conditions, such as current vehicle speed, road gradient, trailer load distribution, and estimated road surface conditions. Such parameters may be monitored continuously by the computer system 100, allowing the threshold range a72 to be adjusted smoothly and proportionally as driving conditions evolve. Event-trigger updates occur in response to discrete operational events that may significantly alter the vehicle state, such as loading or unloading of cargo, trailer attachment or detachment, or activation of specific driving modes (e.g., hill descent). Upon detection of such an event, the threshold range a72 may be re-evaluated and updated to reflect the changed dynamics of the vehicle combination.

In other words, while the threshold range is typically a predefined range stored in the memory 104, it may be adaptively updated by the processing circuitry 102a to improve classification of the operational region based on either gradual changes in vehicle behavior or discrete shifts in vehicle configuration. Accordingly, the predefined threshold range a72 of the steady-state operational region 72 may be defined in several different ways, including a static acceleration magnitude value (e.g. less than 0.1 m/s²), and/or dynamically adjusted acceleration threshold range based on gradual changes in vehicle behavior and/or shifts in vehicle configuration. Data of the predefined operational regions 72, 74, 76 may be stored in the memory 104 of the computer system 100 and used by the processing circuitry 102 during operation of the vehicle combination 1. Analogously, data of the predefined threshold range a72 may be stored in the memory and used by the processing circuitry 102 during operation of the vehicle combination 1. As used herein, the term "within a predefined threshold range" refers to a value that lies inside or at the boundaries of the specified range. Accordingly, a longitudinal acceleration equal to either the positive or negative threshold value is considered to fall within the range.

It should also be noted that, while Fig. 3 schematically illustrates an example in which the steady-state operational region 72 is symmetrically distributed around zero acceleration, the predefined threshold range a72, centered around zero, may comprise a lower and an upper bound that are not equal in magnitude. In other words, the threshold range may be asymmetrically distributed around zero acceleration, such that the minimum and maximum allowable longitudinal acceleration values differ. This asymmetric distribution provides flexibility to accommodate practical driving conditions, including potential asymmetries in braking and propulsion behavior, and thereby supports more accurate and context-sensitive classification of the operational region of the vehicle combination.

Optionally, the predefined threshold range a72 used to classify the operational region may be adapted based on additional data, thereby enabling a more context-aware and sophisticated classification of the vehicle's dynamic state. In one example, the processing circuitry 102a is configured to receive a measure of a parameter related to at least one of lateral-yaw motion and road condition, and to modify the predefined threshold range a72 based on the received measure of the parameter, or measures of the parameters.

The parameter related to lateral-yaw motion may include any of a current or predicted lateral acceleration of the vehicle combination 1, a yaw rate of the towing vehicle 3, an articulation angle of the coupling 7 between the towing vehicle 3 and the trailer 5, a steering angle of the one or more front axles, or estimated or measured coupling forces at the trailer connection (coupling 7). These parameters may reflect cornering behavior, trailer instability, or abrupt steering inputs.

The parameter related to road condition may include, for example, estimated or predicted road grade, road surface friction level, or road curvature derived from perception systems, map data, or vehicle dynamics estimators. These inputs may reflect degraded traction conditions, steep inclines, or curve-based control adjustments.

In some examples, the predefined threshold range a72 may be adjusted using a scaling factor derived from one or more of the above parameters. This allows the vehicle combination 1 to respond more conservatively in low-traction or high-risk situations.

Example including a yaw-based adjustment: During a high-speed lane change on dry asphalt, the computer system 100 may detect a high yaw rate and articulation angle and narrow the acceleration threshold range a72 from ±0.3 m/s² to ±0.2 m/s² to trigger earlier activation of dynamic operational region control.

Example including a road-condition-based adjustment: When approaching a downhill gravel section, map-based road condition data may reduce the threshold range a72 to allow earlier torque limitation to stabilize the trailer 5 under reduced friction.

Example including a combined adjustment: When the vehicle is cornering on a wet and inclined road, a combination of elevated yaw rate and low road friction results in an even narrower threshold, e.g., ±0.15 m/s², to prioritize trailer stability and reduce propulsion asymmetry between units.

As mentioned above, the processing circuitry 102a is further configured to determine the set of control limits 80 for controlling at least one of propulsion and braking of the trailer 5. The set of control limits 80 comprises at least one of a set of power limits, a set of torque limits, and a set of force limits. The determination of the set of control limits is made responsive to the determined operational region. Several examples are provided below to illustrate the different alternatives and combinations that may be employed.

In one example, the set of control limits 80 is further based on at least one of: a proportion of friction forces acting on the trailer 5; a proportion of gravitational forces acting on the trailer 5; coupling forces between the towing vehicle 3 and the trailer 5; and a measured articulation angle between the towing vehicle 3 and the trailer 5. The coupling forces between the towing vehicle 3 and the trailer 5 may be either estimated or measured, for example by using a force sensor configured to measure a current coupling force, by estimating a predicted coupling force using a coupling force model or using another suitable technique. As used herein, the coupling forces refer to the forces transmitted through the coupling 7. The proportion of friction forces acting on the trailer 5 may refer to any one of the proportion of friction forces acting on the trailer 5 as distributed per wheel axis and the proportion of friction forces acting on the trailer 5 as distributed per wheel. The proportion of gravitational forces acting on the trailer 5 may refer to any one of the proportion of gravitational forces acting on the trailer 5 as distributed per wheel axis and proportion of gravitational forces acting on the trailer 5 as distributed per wheel. The articulation angle may be measured using an angle sensor arranged at the coupling 7, as is known per se. In practice, the proportion of friction or gravitational forces per wheel or wheel axis may be estimated based on available sensor data, vehicle dynamics models, or empirical calibration. For example, friction force proportions may be inferred from wheel slip measurements, estimated normal forces, or axle load sensors, while gravitational force distribution may be derived from the geometry of the trailer and trailer inclination data. These estimations may be updated in real time by the computer system 100 using model-based or sensor-based techniques known per se in the field of vehicle dynamics control.

In addition, or alternatively, the set of control limits 80 is further constrained based on data indicative of actuator capabilities of the trailer 5. Such actuator capabilities may include, for example, minimum and maximum continuous torque limits, representing the range of torque that the electric machine or equivalent propulsion actuator can deliver over extended periods without exceeding thermal or mechanical design constraints. The actuator capabilities may further comprise peak torque limits, corresponding to the maximum and minimum torque values that can be delivered for limited durations (e.g., for acceleration or hill-climbing) without triggering protective thresholds. Further limitations may relate to the energy storage system 6b of the trailer 5, including minimum and maximum current limits or power limits of the high-voltage battery, drive inverter, or associated components. In some embodiments, actuator capabilities may also encompass power, force, or torque rate limitations, such as the maximum rate at which the motor can increase or decrease its power output over time. These constraints may be influenced by physical and operational characteristics of the trailer, including thermal management considerations (e.g., cooling capacity or thermal protection levels), mechanical limitations (e.g., inertia of the rotating components or drivetrain stiffness), and electrical limitations (e.g., maximum allowable current draw or voltage range for safe operation). The data indicative of actuator capabilities may include measured or estimated actuator constraints, including thermal models, torque limits, or electrical current boundaries. Such actuator capabilities are defined to account for factors that influence safe operation, including thermal thresholds, mechanical durability, and power system constraints, and are intended to prevent overheating, mechanical failure, inefficiency, or damage to propulsion and braking actuators.

By incorporating such actuator capability constraints into the determination of the control limits 80, the computer system 100 enables that the resulting propulsion and braking commands issued to the trailer 5 remain within safe, sustainable, and physically realizable operating boundaries.

In one example, the processing circuitry 102a is configured to determine that the vehicle combination 1 is operating in the dynamic operational region 74 in response to the detected longitudinal acceleration aₓ of the vehicle combination 1 being outside the predefined threshold range a72, and, for the dynamic operational region 74, to apply both power limits and either torque limits or force limits concurrently for controlling at least one of propulsion and braking of the trailer 5.

In one example, when the determined operational region is the dynamic operational region 74, the processing circuitry 102a is configured to further define the set of control limits 80 based on a current longitudinal speed vₓ of the vehicle combination 1. The speed may be measured by a speed sensor or the like. It has been observed that it may be particularly important to consider power and torque limits depending on the vehicle speed in the dynamic operational region 74.

In one example, the processing circuitry 102a is configured to further define the set of control limits 80 based on a mass estimation of the vehicle combination 1. That is, the set of control limits 80 is selected such that the effect of the trailer 5 on the mass estimation is reduced, such that an error of the estimated mass is within a mass error threshold.

In one example, when the determined operational region is the dynamic operational region 74, the processing circuitry 102a is configured to further define the set of control limits 80 based on at least one of the following: maximum and minimum force values; maximum and minimum power values; and maximum and minimum torque values, such that a contribution of a trailer force to a mass estimation of the vehicle combination 1 remains below a predefined threshold. Hereby, it becomes possible to ensure that the error in the estimated mass is within a predefined allowable margin.

In one example, the set of control limits 80 for the dynamic operational region 74 is further defined to constrain a contribution of the trailer longitudinal force Fₓ₂ to mass estimation such that the resulting estimation error remains below a predefined threshold. Specifically, the force Fₓ₂ is bounded such that the ratio between Fₓ₂ and aₓ does not exceed a maximum allowable mass deviation Δmₘₐₓ, for example, 10% of the unladen mass of the vehicle combination 1. Accordingly, the maximum and minimum allowable values for Fₓ₂ may be defined as a function of the current measured longitudinal acceleration aₓ and the specified estimation threshold. These bounds may also be translated into corresponding power limits by multiplying Fₓ₂ with the current longitudinal speed vₓ, thereby ensuring that the error in the estimated mass remains within acceptable margins while maintaining safe and efficient trailer control.

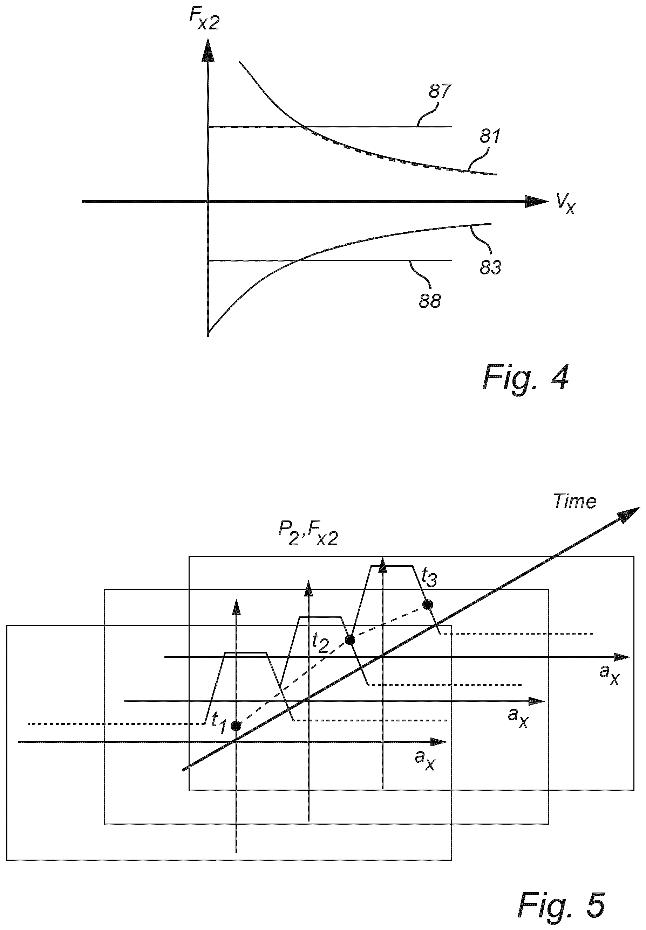

Fig. 4 illustrates the application of a second set of control limits 80, 80b used in the dynamic operational region 74, in which the longitudinal acceleration *aₓ* of the vehicle combination 1 lies outside the predefined threshold range a72 centered around zero. In this region 74, the trailer processing circuitry 102b is configured to adjust both power and force limits for propulsion and braking of the trailer 5, based on the current longitudinal speed vₓ of the vehicle combination 1.

The vertical axis Y in Fig. 4 represents the trailer longitudinal force Fₓ₂, while the horizontal axis X corresponds to the longitudinal speed vₓ. The diagram in Fig. 4 shows how fixed force limits 87, 88 (upper and lower horizontal lines) are supplemented by speed-dependent power limits 81, 83 (illustrated as sloped dashed curves) to define an envelope within which the trailer's propulsion and braking actions must remain. Specifically, the maximum and minimum power limits 81, 83 decrease with increasing speed, reflecting physical and electrical constraints of the trailer drivetrain and supporting more accurate and stable vehicle behavior at higher velocities.

Fig. 4 also illustrates that applying only a force limit or only a power limit in the dynamic operational region 74 may in some situations be insufficient to avoid disturbances in the vehicle's mass estimation process. At higher speeds, a force-limited approach could allow excessive power that may distort mass-related parameters derived from the acceleration and applied force. Conversely, at low speeds, a pure power limit could permit high forces that produce non-representative dynamic effects. Therefore, the processing circuitry 102b may be configured to provide simultaneous enforcement of both force and power limits in the dynamic operational region 74 to reduce the risk that the trailer's contribution to propulsion or braking may not interfere with mass estimation or predictive control functions.

The situation illustrated in Fig. 4 allows the trailer controller 100b (e.g. by the processing circuitry 102b) to determine a speed-adaptive set of control limits 80 in the dynamic operational region 74, maintaining a balance between system safety, energy efficiency, and accurate vehicle modeling. Accordingly, in some examples, as described above, the control limits 80 are further defined based on vehicle speed, estimated mass, and maximum and minimum force, power or torque values.

In one example, the processing circuitry 102a is configured to determine a combination of control limits 80 for the steady-state operational region 72 and the dynamic operational region 74. Moreover, in such an example, the processing circuitry 102a is configured to apply the determined combination of control limits 80 for the steady-state operational region 72 during the transitional operational region. Determining a combination of control limits 80 for the steady-state operational region 72 and the dynamic operational region 74 and applying the combination of control limits 80 for the steady-state operational region 72 and the dynamic operational region 74 may be performed for example by interpolating between the control limits 80 for the steady-state operational region 72 and the dynamic operational region 74.

Although the operation(s) of determining the set of control limits 80 is here performed in the processing circuitry 102a of the towing vehicle 3, the operation of determining the set of control limits 80 can be performed in several different ways by the various processing circuitry 102, 102a, 102b. In one example, the operation of determining the set of control limits 80 is performed in the processing circuitry 102b of the trailer 5. Alternatively, or in addition, the operation of determining the set of control limits 80 is performed in a centralized processing circuitry 102 of the computer system 100.

Moreover, in this example, the processing circuitry 102a is configured to transmit the determined set of control limits 80 to the trailer 5. More specifically, the towing vehicle processing circuitry 102a is configured to transmit the determined set of control limits 80 to the trailer processing circuitry 102b. For example, the towing vehicle processing circuitry 102a is configured to transmit the determined set of control limits 80 to the trailer processing circuitry 102b over a digital communication interface.

The trailer processing circuitry 102b is configured to receive the determined set of control limits 80, and to restrict at least one of propulsion and braking of the trailer 5 in accordance with the transmitted and received set of control limits 80. The operation of restricting at least one of propulsion and braking of the trailer 5 in accordance with the transmitted set of control limits can be performed in several different ways by the processing circuitry 102b. For example, the processing circuitry 102b is configured to calculate the drive torque or braking torque of the trailer 5 such that the control limits 80 are enforced. In this context, propulsion may refer to propulsion power, and braking may refer to braking torque.

In one example, the processing circuitry 102b receives a requested propulsion or braking value from a local control function (e.g., cruise control, regenerative braking, slope compensation, or driver request translation), and evaluates the request against the applicable control limits 80. If the requested propulsion power exceeds a transmitted upper limit, the request is clipped to the maximum allowed value. Similarly, if the requested braking torque exceeds a transmitted braking limit, the request is reduced to conform to the defined range.

In another example, the control limits 80 may comprise both force-based and power-based constraints. The processing circuitry 102b is configured to determine whether a given output satisfies both conditions, taking into account current vehicle speed and motor state. For instance, the trailer controller may compute the maximum permissible torque at the current speed such that both force and power constraints are not exceeded simultaneously.

In yet another example, the control limits 80 may include rate-based constraints, such as maximum allowable change in propulsion or braking per unit time. The processing circuitry 102b may enforce such constraints by applying rate limiters or low-pass filters to the requested output signal, thereby avoiding abrupt changes in trailer behavior.

By enforcing the received control limits using these techniques, the computer system 100 is configured to allow for better compliance with towing vehicle policies while accounting for local actuator conditions, resulting in safe and coordinated trailer behavior under diverse driving conditions.

In one example, the processing circuitry 102b may be configured to further restrict at least one of propulsion and braking of the trailer 5 by restricting a rate of change of a requested power or force from the trailer 5. For example, the processing circuitry 102b may be configured to restrict at least one of propulsion and braking of the trailer 5 by applying a low-pass filter to a requested output signal. In particular, the low-pass filter may be used to restrict a rate of change of a requested power or force from the trailer 5. By filtering the requested output, the processing circuitry 102b allows for smoother transitions in trailer propulsion and braking, thereby reducing abrupt dynamic responses. A low-pass filter is known per se and may be implemented in hardware, software, or a combination thereof.

The application of a low-pass filter to limit the rate of change of a requested force or power from the trailer 5 may be particularly beneficial when the vehicle combination 1 is operating within the steady-state operational region 72, i.e., when the longitudinal acceleration *a* is within a predefined threshold range *a*72 centered around zero. In such conditions, the vehicle combination 1 is typically operating at or near constant speed, and small perturbations in propulsion or braking input from the trailer 5 can significantly influence the closed-loop longitudinal control system of the vehicle combination 1.

For instance, in scenarios where the trailer 5 begins to generate a propulsion force while the towing vehicle 3 is maintaining constant speed (i.e., zero longitudinal acceleration), the additional propulsion may cause the vehicle combination 1 to accelerate. Two outcomes are then possible. In a first example, the propulsion force from the trailer 5 increases rapidly, causing the overall longitudinal acceleration to exceed the steady-state range, thereby transitioning the vehicle combination 1 into the dynamic operational region 74. In this region, more restrictive control limits may apply, reducing the trailer's available propulsion power. In a second case, the propulsion force from the trailer 5 increases more gradually, e.g., due to rate-limiting by a low-pass filter, allowing sufficient time for the driver or an advanced driver-assistance system (ADAS), such as Adaptive Cruise Control (ACC), to compensate by adjusting the propulsion force of the towing vehicle 3. As a result, the overall speed of the vehicle combination 1 can remain relatively stable, and the vehicle combination may remain within the steady-state operational region 72.

Fig. 5 illustrates an example scenario in which the trailer propulsion force F₂, the trailer propulsion power P₂, and longitudinal acceleration aₓ evolve over time. For ease of reference, three different times t1, t2 and t3 are shown. In the depicted example, an increase in trailer propulsion occurs without immediate compensation by the towing vehicle 3 or an automated driving function such as Adaptive Cruise Control (ACC). As a result, the vehicle combination 1 experiences a gradual rise in longitudinal acceleration aₓ. Once the longitudinal acceleration aₓ exceeds the predefined threshold range a72 of the steady-state operational region 72 (as shown e.g. in Fig. 3), the characteristics of the longitudinal acceleration aₓ of the vehicle combination 1 transitions into the dynamic operational region 74, prompting the trailer controller 100b, such as the processing circuitry 102b, to restrict the applied propulsion force or power in accordance with the predefined control limits 80.

Maintaining effective coordination between the trailer 5 and the towing vehicle 3, or its driver assistance systems, may be useful for preserving longitudinal stability and enabling energy-efficient driving. Through the application of a rate limiter, such as a low-pass filter, the processing circuitry 102b can prevent sudden or excessive propulsion or braking impulses that might otherwise interfere with upstream vehicle control layers or compromise vehicle stability.

Although particularly beneficial during steady-state operation, rate limiting of the trailer's output may not be limited to that region. A similar approach can be employed in transitional and dynamic operational regions 76, 74 to attenuate control signal variations, reduce oscillatory behavior, and support smoother integration with fast-changing vehicle dynamics. Depending on the operational region and prevailing road or vehicle conditions, the processing circuitry 102b may further be configured to adapt a time constant or cutoff frequency of the low-pass filter to further enhance trailer response.

Moreover, although the operation of restricting propulsion and braking of the trailer 5 is here exemplified by the processing circuitry 102b, the operation may be performed in several different ways by the various processing circuitry 102, 102a, 102b. In one example, the operation of determining the restriction in propulsion or braking is determined in the processing circuitry 102a of the towing vehicle 3. Alternatively, or in addition, the operation of determining the restriction in propulsion power or braking power is determined in the processing circuitry 102b of the trailer 5. Alternatively, or in addition, the operation of determining the restriction in propulsion power or braking power is determined in a centralized processing circuitry 102 of the computer system 100.

In one example, the processing circuitry 102b is further configured to determine a limitation or disruption in the digital communication between the towing vehicle 3 and the trailer 5, and to control the trailer 5 based on a currently selected set of control limits 80. Communication disruptions may be identified based on signal loss, timeouts, integrity failures, or absence of periodic control messages from the towing vehicle processing circuitry 102a. Upon detecting such a condition, the trailer controller 100b transitions to a fallback mode in which the trailer processing circuitry 102b continues to autonomously regulate at least one of propulsion and braking based on a locally available set of control limits 80, such as the most recently received limits or a stored default profile corresponding to a known operational region. The fallback behavior allows the trailer 5 to continue to apply safe and contextually appropriate force or power levels in the absence of real-time control input from the towing vehicle 3. Depending on the current or estimated operational region of the vehicle combination 1, such as steady-state, dynamic, or transitional, the trailer processing circuitry 102b can maintain propulsion or braking actions within pre-authorized torque, power, or force boundaries. In some implementations, the fallback profile may be dynamically learned or updated over time based on accumulated operational history.

Such a configuration of the computer system 100 allows for enhanced interoperability and robustness across a wide variety of vehicle-trailer configurations. These configurations include, for example, trailers 5 equipped with only positive or negative torque capabilities, or trucks that support only limited torque direction control. In many of these cases, conventional systems may not be designed to handle communication loss and may respond by disabling trailer actuation entirely or defaulting to a safe-off state.

As such, the proposed computer system 100 addresses these limitations by enabling the trailer 5 to autonomously maintain compliance with predefined control limits even in isolation. The fallback capability may be particularly relevant to mixed-fleet environments and real-world interoperability use cases, where communication protocols, capabilities, and levels of integration may vary between different truck and trailer types.

In one example, the at least one of propulsion and braking of the trailer 5 is restricted in accordance with the transmitted determined set of control limits 80 and further constrained based on any one of a brake request and a stability intervention.

The present disclosure also relates to a computer system 100, wherein the one or more processing circuitry 102 are provided in the form of a towing vehicle processing circuitry 102a comprised in a towing controller 100a and a trailer processing circuitry 102b comprised in a trailer controller 100b. The towing vehicle processing circuitry 102a is configured to transmit the determined set of control limits 80 to the trailer processing circuitry 102b, and the trailer processing circuitry 102b is configured to receive the determined set of control limits. In addition, the trailer processing circuitry 102b is configured to restrict at least one of propulsion and braking of the trailer 5 in accordance with the transmitted determined set of control limits 80. In this example, the towing vehicle processing circuitry 102a is configured to be in communication with the trailer processing circuitry 102b. The trailer processing circuitry 102b is configured to be in communication with the electric drivetrain 6 of the trailer 5. Moreover, the processing circuitry 102b is configured to be in communication with the towing vehicle processing circuitry 102a.

In one example, the towing vehicle processing circuitry 102a is further configured to determine the operational region of the vehicle combination 1 in response to receiving a request from the trailer processing circuitry 102b.

In one example, the trailer processing circuitry 102b is further configured to determine a limitation or disruption in the digital communication between the towing vehicle 3 and the trailer 5, and to control the trailer 5 based on a currently selected set of control limits 80. A technical advantage may include selecting and maintaining a set of control limits to ensure stability of the vehicle combination in the event of limited or no digital communication between the towing vehicle and the trailer.

The present disclosure also relates to a vehicle combination 1 comprising the towing vehicle 3, the trailer 5 comprising the electric drivetrain 6, and the computer system 100 having one or more processing circuitry 102, 102a, 102b.

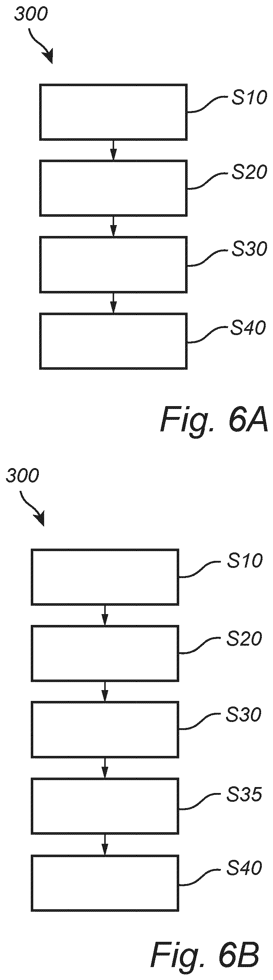

Fig. 6A is an exemplary method according to an example. The method is implemented by one or more of the processing circuitry 102, 102a, 102b. Accordingly, the method is here a computer-implemented method 300. Referring to the flow-chart in Fig. 6A, with additional reference to the other figures as indicated, the method 300 comprises an initial step S10 of determining a longitudinal acceleration aₓ of the vehicle combination 1 over the given time period t.

Subsequently, the method 300 comprises a step S20 of determining, based on the determined longitudinal acceleration aₓ, an operational region of the vehicle combination 1. The operational region is one of the plurality of predefined operational regions 72, 74, 76. The plurality of predefined operational regions comprises the steady-state operational region 72, in which the longitudinal acceleration aₓ is within the predefined threshold range a72 centered around zero acceleration, the dynamic operational region 74, in which the longitudinal acceleration aₓ is outside the predefined threshold range a72, and the transitional operational region 76, in which the longitudinal acceleration aₓ transitions between the steady-state operational region 72 and the dynamic operational region 76.

In addition, the method 300 comprises a step S30 of determining, based on the determined operational region, a set of control limits 80 for controlling at least one of propulsion and braking of the trailer 5. The set of control limits 80 comprises at least one of a set of power limits, a set of torque limits, and a set of force limits.

Subsequently, the method 300 comprises a step S40 of restricting at least one of propulsion and braking of the trailer 5 in accordance with the determined set of control limits 80.

Each one of the steps S10 to S40 are here performed by the processing circuitry 102, 102a, 102b of the computer system 100.

The method 300 of Fig. 6A may be implemented during operation of the vehicle combination 1 according to the following exemplary implementation. Assuming that the vehicle combination 1 is operating under normal driving conditions on a straight, level road. The towing vehicle 3 includes towing vehicle processing circuitry 102a, and the trailer 5 includes trailer processing circuitry 102b. In the first step S10, the towing vehicle processing circuitry 102a determines a longitudinal acceleration aₓ of the vehicle combination 1 over a given time period t, based on sensor data such as accelerometer output or data derived from wheel speed sensors. In step S20, the towing vehicle processing circuitry 102a determines an operational region of the vehicle combination 1, based on the previously determined longitudinal acceleration aₓ. The operational region is classified as one of a plurality of predefined operational regions 72, 74, 76. For example, the longitudinal acceleration aₓ is determined to fall within the predefined threshold range a72 centered around zero acceleration, and the operational region is accordingly identified as the steady-state operational region 72. In step S30, the towing vehicle processing circuitry 102a determines a set of control limits 80 for controlling at least one of propulsion and braking of the trailer 5. The set of control limits 80 includes at least one of a set of power limits, a set of torque limits, and a set of force limits. The determined set of control limits 80 may include moderate upper and lower thresholds appropriate for steady-state travel. In step S40, the trailer processing circuitry 102b restricts at least one of propulsion and braking of the trailer 5 in accordance with the determined set of control limits 80.

Fig. 6B is an exemplary method according to another example, which is here also a computer-implemented method 300. In this example, the method 300 is implemented by processing circuitry in the form of the towing vehicle processing circuitry 102a and the trailer processing circuitry 102b, as described in the following. In particular, the method 300 of Fig. 6B comprises an additional intermediate step S35 of transmitting the determined set of control limits 80 to the trailer 5. Accordingly, while referring to the flow-chart in Fig. 6B, the method 300 comprises the step S10 of determining the longitudinal acceleration aₓ of the vehicle combination 1 over the given time period t. Step S10 is here performed by the towing vehicle processing circuitry 102a.

Subsequently, the method 300 comprises the step S20 of determining, based on the determined longitudinal acceleration aₓ, an operational region of the vehicle combination 1. The operational region is one of the plurality of predefined operational regions 72, 74, 76. The plurality of predefined operational regions comprises the steady-state operational region 72, in which the longitudinal acceleration aₓ is within the predefined threshold range a72 centered around zero acceleration, the dynamic operational region 74, in which the longitudinal acceleration aₓ is outside the predefined threshold range a72, and the transitional operational region 76, in which the longitudinal acceleration aₓ transitions between the steady-state operational region 72 and the dynamic operational region 76. Step S20 is here performed by the towing vehicle processing circuitry 102a.

In addition, the method 300 comprises the step S30 of determining, based on the determined operational region, the set of control limits 80 for controlling at least one of propulsion and braking of the trailer 5. The set of control limits 80 comprises at least one of a set of power limits, a set of torque limits, and a set of force limits. Step S30 is here performed by the towing vehicle processing circuitry 102a.

Moreover, the method 300 comprises the step S35 of transmitting the determined set of control limits 80 to the trailer 5. Step S35 is here performed by the towing vehicle processing circuitry 102a. More specifically, the method 300 comprises the step S35 of transmitting, by the towing vehicle processing circuitry 102a, the determined set of control limits 80 to the trailer processing circuitry 102b of the trailer 5.

Subsequently, the method 300 comprises the step S40 of restricting, by the trailer processing circuitry 102b, at least one of propulsion and braking of the trailer 5 in accordance with the transmitted determined set of control limits 80.

In one example, determining the operational region (step S20) further comprises determining that the determined longitudinal acceleration aₓ falls: within the predefined threshold range (a72) centered around zero acceleration, wherein the operational region is the steady-state operational region 72; outside the predefined threshold range (a72), wherein the operational region is the dynamic operational region 74; or in a transition zone between the steady-state and dynamic operational regions, wherein the operational region is the transitional operational region 76.

In one example, determining the set of control limits (step S30) further comprises defining the set of control limits based on at least one of: a proportion of friction forces acting on the trailer 5; a proportion of gravitational forces acting on the trailer 5; coupling forces between the towing vehicle 3 and the trailer 5; and measured articulation angle between the towing vehicle 3 and the trailer 5.

In one example, the set of control limits determined in step S30 is further constrained based on data indicative of actuator capabilities of the trailer 5. The actuator capabilities may include, for example, continuous or peak torque limits, current or power limits of the energy storage unit, rate-of-change constraints, or thermal and mechanical limitations.

In one example, restricting at least one of propulsion and braking of the trailer 5 (step S40) is further based on at least one of a brake request and a stability intervention received by the trailer processing circuitry 102b.

In one example, when the determined operational region is the dynamic operational region 74, determining the set of control limits (step S30) further comprises defining the set of control limits based on a current longitudinal speed vₓ of the vehicle combination 1.

In one example, determining the set of control limits (step S30) further comprises defining the set based on a mass estimation of the vehicle combination 1.

In one example, when the determined operational region is the dynamic operational region 74, determining the set of control limits (step S30) further comprises defining the control limits based on at least one of: maximum and minimum force values; maximum and minimum power values; and maximum and minimum torque values, such that a contribution of the trailer force to a mass estimation of the vehicle combination remains below a predefined threshold.

In one example, when the determined operational region is the transitional operational region 76, determining the set of control limits (step S30) comprises calculating a combination of control limits defined for the steady-state and dynamic operational regions.

In one example, the method 300 further comprises receiving, by the towing vehicle processing circuitry 102a, a measure of a parameter related to at least one of lateral-yaw motion and road condition and modifying the predefined threshold range (a72) based on the received measure. The parameter may include at least one of a steering angle, articulation angle, yaw rate, lateral acceleration, road curvature, grade, and surface condition.

In one example, the method 300 further comprises restricting, by the trailer processing circuitry 102b, a rate of change of a requested power or force from the trailer 5, for example by using a low-pass filter.

In one example, the method 300 is implemented by a distributed computer system comprising towing vehicle processing circuitry 102a and trailer processing circuitry 102b, wherein the set of control limits is transmitted from the towing vehicle processing circuitry 102a to the trailer processing circuitry 102b, and the trailer processing circuitry 102b is configured to restrict at least one of propulsion and braking in accordance therewith.

In one example, the operational region of the vehicle combination is determined by the towing vehicle processing circuitry 102a in response to receiving a request from the trailer processing circuitry 102b.

In one example, the trailer processing circuitry 102b is further configured to determine a limitation or disruption in the digital communication with the towing vehicle 3, and to control the trailer 5 based on a currently selected set of control limits 80.

The method 300 of Fig. 6B may be implemented during operation of the vehicle combination 1 according to the following exemplary implementation. Assuming that the vehicle combination 1 is operating on a highway with mild traffic fluctuations. In step S10, the towing vehicle processing circuitry 102a determines the longitudinal acceleration aₓ of the vehicle combination 1 over a time period t using onboard sensing systems. In step S20, the towing vehicle processing circuitry 102a determines that the longitudinal acceleration aₓ falls within the predefined threshold range a72 centered around zero acceleration. Accordingly, the operational region is determined to be the steady-state operational region 72. In step S30, the towing vehicle processing circuitry 102a determines a set of control limits 80 for controlling at least one of propulsion and braking of the trailer 5. In this implementation, the determination of the set of control limits 80 is further based on actuator capabilities of the trailer 5, such as continuous torque limits of the electric motor and peak power output constrained by thermal capacity and battery current limits. The towing vehicle processing circuitry 102a may also incorporate coupling force estimates to refine the selected values of the set of control limits 80. In step S35, the towing vehicle processing circuitry 102a transmits the determined set of control limits 80 to the trailer processing circuitry 102b via a digital communication interface compliant with the tractor-trailer link. In step S40, the trailer processing circuitry 102b restricts propulsion and/or braking of the trailer 5 in accordance with the transmitted and received set of control limits 80. Additionally, the trailer processing circuitry 102b applies a low-pass filter to limit the rate of change of a requested propulsion force. The application of the low-pass filter allows the adaptive cruise control function of the towing vehicle 3 to detect the trailer's propulsion contribution and to adjust the propulsion force of the towing vehicle 3 accordingly, thereby avoiding unintended acceleration of the vehicle combination 1. This interaction maintains the longitudinal stability of the vehicle combination 1 and avoids triggering a transition to the dynamic operational region 74. The use of a low-pass filter also prevents abrupt changes in force output that could interfere with higher-level control strategies of the towing vehicle 3. In an additional scenario, the trailer processing circuitry 102b detects a temporary disruption in digital communication with the towing vehicle 3. In such a case, the trailer processing circuitry 102b continues to restrict propulsion and braking based on a previously selected set of control limits 80, ensuring safe fallback behavior and maintaining consistent vehicle dynamics until communication is re-established.

The implementation described above may likewise be applicable when the operational region determined in step S20 is the dynamic operational region 74. In such a scenario, the towing vehicle processing circuitry 102a determines that the longitudinal acceleration ax is outside the predefined threshold range a72. Accordingly, the set of control limits 80 determined in step S30 may be more restrictive to mitigate sudden propulsion or braking commands from the trailer 5. For example, the set of control limits 80 may be further defined based on the current longitudinal speed of the vehicle combination 1 and the estimated vehicle mass, ensuring that propulsion force contributions from the trailer 5 do not adversely impact mass estimation or vehicle stability. This dynamic adjustment helps to ensure safe operation during high acceleration or deceleration events.

In yet another example, the operational region determined in step S20 is the transitional operational region 76, which corresponds to a state in which the longitudinal acceleration aₓ transitions between the steady-state operational region 72 and the dynamic operational region 74. In this case, the towing vehicle processing circuitry 102a determines a set of control limits 80 that comprises a blend of control limits associated with the steady-state operational region 72 and the dynamic operational region 74. This blended set of control limits 80 is selected to enable smooth modulation of propulsion and braking during changes in acceleration state, reducing abrupt shifts in trailer behavior and enhancing driving comfort. For instance, during mild acceleration while entering a highway ramp, the vehicle combination 1 may transition from steady-state into the transitional operational region 76. The set of control limits 80 applied in such conditions may allow moderate trailer propulsion while gradually ramping up torque or power delivery, ensuring stability and avoiding sudden energy surges that could interfere with towing vehicle dynamics or predictive cruise control systems.

The present disclosure also relates to a computer program product comprising program code for performing, when executed by the one or more processing circuitry 102, 102a, 102b comprised in the computer system 100, the method 300 of the any of the examples of Figs. 6A and 6B.

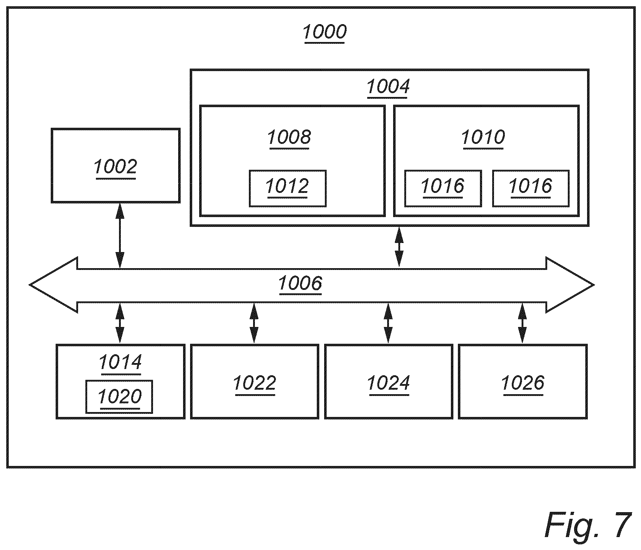

Fig. 7 is a schematic diagram of a computer system 1000 for implementing examples disclosed herein, such as for implementing examples of the computer system 100 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system 100 configured to control at least one trailer 5 in a vehicle combination 1, the vehicle combination comprising a towing vehicle 3 and the trailer, the trailer comprising an electric drivetrain 6, wherein the computer system comprises one or more processing circuitry 102, 102a, 102b configured to: determine a longitudinal acceleration ax of the vehicle combination over a given time period t; determine, based on the determined longitudinal acceleration, an operational region of the vehicle combination, the operational region being one of a plurality of predefined operational regions 72, 74, 76, the plurality of predefined operational regions comprising: a steady-state operational region 72, in which the longitudinal acceleration is within a predefined threshold range a72 centered around zero acceleration; a dynamic operational region 74, in which the longitudinal acceleration is outside the predefined threshold range; a transitional operational region 76, in which the longitudinal acceleration transitions between the steady-state operational region and the dynamic operational region; determine, based on the determined operational region, a set of control limits 80 for controlling at least one of propulsion and braking of the trailer, the set of control limits comprising at least one of a set of power limits, a set of torque limits, and a set of force limits; and restrict at least one of propulsion and braking of the trailer in accordance with the determined set of control limits.

Example 2. The computer system of example 1, wherein the one or more processing circuitry are configured to determine the operational region by determining that the determined longitudinal acceleration falls: within the predefined threshold range centered around zero acceleration, wherein the operational region is the steady-state operational region 72; outside the predefined threshold range, wherein the operational region is the dynamic operational region 74; or in a transition zone between the steady-state and dynamic operational regions, wherein the operational region is the transitional operational region 76.

Example 3. The computer system of any one of the preceding examples, wherein the set of control limits is based on at least one of: a proportion of friction forces acting on the trailer; a proportion of gravitational forces acting on the trailer; coupling forces between the towing vehicle and the trailer; and a measured articulation angle between the towing vehicle and the trailer.

Example 4. The computer system of any one of the preceding examples, wherein the set of control limits are further constrained based on data indicative of actuator capabilities of the trailer.

Example 5. The computer system according to any one of the preceding examples, wherein the at least one of propulsion and braking of the trailer is restricted in accordance with the determined set of control limits and further constrained based on any one of a brake request and a stability intervention.

Example 6. The computer system of any one of the preceding examples, wherein, when the determined operational region is the dynamic operational region 74, the set of control limits is further defined based on a current longitudinal speed vₓ of the vehicle combination.

Example 7. The computer system of any one of the preceding examples, wherein the set of control limits is further defined based on a mass estimation of the vehicle combination.

Example 8. The computer system of any one of the preceding examples, wherein, when the determined operational region is the dynamic operational region 74, the set of control limits is further defined based on at least one of the following: maximum and minimum force values; maximum and minimum power values; and maximum and minimum torque values, such that a contribution of a trailer force to a mass estimation of the vehicle combination remains below a predefined threshold.

Example 9. The computer system of any one of the preceding examples, wherein a combination of control limits for the steady-state operational region and the dynamic operational region is determined and applied during the transitional operational region.

Example 10. The computer system of any one of the preceding examples, wherein the one or more processing circuitry are further configured to receive a measure of a parameter related to at least one of lateral-yaw motion and road condition, and to modify the predefined threshold range based on the received measure of the parameter.

Example 11. The computer system of any one of the preceding examples, wherein the one or more processing circuitry are further configured to restrict at least one of propulsion and braking of the trailer by restricting a rate of change of a requested power or force from the trailer.

Example 12. The computer system of any one of the preceding examples, wherein the one or more processing circuitry are further configured to transmit the determined set of control limits to the trailer.

Example 13. The computer system of any one of the preceding examples, wherein the one or more processing circuitry are provided in the form of a towing vehicle processing circuitry 102a and a trailer processing circuitry 102b, wherein the towing vehicle processing circuitry 102a is configured to transmit the determined set of control limits to the trailer processing circuitry 102b, and the trailer processing circuitry 102b is configured to receive the determined set of control limits, and to restrict at least one of propulsion and braking of the trailer in accordance with the transmitted determined set of control limits

Example 14. The computer system of example 13, wherein the towing vehicle processing circuitry 102a is further configured to determine the operational region of the vehicle combination in response to receiving a request from the trailer processing circuitry 102b.

Example 15. The computer system of any one of examples 13 to 14, wherein the trailer processing circuitry 102b is further configured to determine a limitation or disruption in the digital communication between the towing vehicle and the trailer, and to control the trailer based on a currently selected set of control limits.

Example 16. A vehicle combination 1 comprising a towing vehicle, a trailer having an electric drivetrain, and a computer system according to any one of the preceding examples.

Example 17. A computer-implemented method 300 for controlling at least one trailer 5 in a vehicle combination 1, the vehicle combination comprising a towing vehicle 3 and the trailer, the trailer comprising an electric drivetrain 6, the method comprising: determining a longitudinal acceleration a of the vehicle combination over a given time period; determining, based on the determined longitudinal acceleration, an operational region of the vehicle combination, the operational region being one of a plurality of predefined operational regions 72, 74, 76, the plurality of predefined operational regions comprising: a steady-state operational region 72, in which the longitudinal acceleration is within a predefined threshold range a72 centered around zero acceleration, a dynamic operational region 74, in which the longitudinal acceleration is outside the predefined threshold range, a transitional operational region 76, in which the longitudinal acceleration transitions between the steady-state operational region and the dynamic operational region; determining, based on the determined operational region, a set of control limits for controlling at least one of propulsion and braking of the trailer, the set of control limits comprising at least one of a set of power limits, a set of torque limits, and a set of force limits; and restricting at least one of propulsion and braking of the trailer in accordance with the determined set of control limits.

Example 18: Method of example 18, further comprising transmitting the determined set of control limits from the towing trailer to the trailer.

Example 19. A computer program product comprising program code for performing, when executed by the one or more processing circuitry comprised in the computer system of any one of examples 1-15, the method of examples 17-18.

Example 20: A non-transitory computer-readable storage medium comprising instructions, which when executed by the processing circuitry comprised in the computer system of any one of examples 1-15, cause the processing circuitry to perform the method of any of examples 17-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) configured to control at least one trailer (5) in a vehicle combination (1), the vehicle combination comprising a towing vehicle (3) and the trailer, the trailer comprising an electric drivetrain (6), wherein the computer system comprises one or more processing circuitry (102, 102a, 102b) configured to:
- determine a longitudinal acceleration (aₓ) of the vehicle combination over a given time period (t);
- determine, based on the determined longitudinal acceleration, an operational region of the vehicle combination, the operational region being one of a plurality of predefined operational regions (72, 74, 76), the plurality of predefined operational regions comprising:
a steady-state operational region (72), in which the longitudinal acceleration is within a predefined threshold range (a72) centered around zero acceleration;
a dynamic operational region (74), in which the longitudinal acceleration is outside the predefined threshold range;
a transitional operational region (76), in which the longitudinal acceleration transitions between the steady-state operational region and the dynamic operational region;
- determine, based on the determined operational region, a set of control limits (80) for controlling at least one of propulsion and braking of the trailer, the set of control limits comprising at least one of a set of power limits, a set of torque limits, and a set of force limits; and
- restrict at least one of propulsion and braking of the trailer in accordance with the determined set of control limits.

2. The computer system of claim 1, wherein the one or more processing circuitry are configured to determine the operational region by determining that the determined longitudinal acceleration falls:
- within the predefined threshold range centered around zero acceleration, wherein the operational region is the steady-state operational region (72);
- outside the predefined threshold range, wherein the operational region is the dynamic operational region (74); or
- in a transition zone between the steady-state and dynamic operational regions, wherein the operational region is the transitional operational region (76).

3. The computer system of any one of the preceding claims, wherein the set of control limits is based on at least one of: a proportion of friction forces acting on the trailer; a proportion of gravitational forces acting on the trailer; coupling forces between the towing vehicle and the trailer; and a measured articulation angle between the towing vehicle and the trailer.

4. The computer system of any one of the preceding claims, wherein the set of control limits are further constrained based on data indicative of actuator capabilities of the trailer.

5. The computer system of any one of the preceding claims, wherein, when the determined operational region is the dynamic operational region (74), the set of control limits is further defined based on a current longitudinal speed (vₓ) of the vehicle combination.

6. The computer system of any one of the preceding claims, wherein the set of control limits is further defined based on a mass estimation of the vehicle combination.

7. The computer system of any one of the preceding claims, wherein, when the determined operational region is the dynamic operational region (74), the set of control limits is further defined based on at least one of the following:
- maximum and minimum force values;
- maximum and minimum power values; and
- maximum and minimum torque values,
such that a contribution of a trailer force to a mass estimation of the vehicle combination remains below a predefined threshold.

8. The computer system of any one of the preceding claims, wherein a combination of control limits for the steady-state operational region and the dynamic operational region is determined and applied during the transitional operational region.

9. The computer system of any one of the preceding claims, wherein the one or more processing circuitry are further configured to receive a measure of a parameter related to at least one of lateral-yaw motion and road condition, and to modify the predefined threshold range based on the received measure of the parameter.

10. The computer system of any one of the preceding claims, wherein the one or more processing circuitry are further configured to restrict at least one of propulsion and braking of the trailer by restricting a rate of change of a requested power or force from the trailer.

11. The computer system of any one of the preceding claims, wherein the one or more processing circuitry are further configured to transmit the determined set of control limits to the trailer.

12. The computer system of any one of the preceding claims, wherein the one or more processing circuitry are provided in the form of a towing vehicle processing circuitry (102a) and a trailer processing circuitry (102b), wherein the towing vehicle processing circuitry (102a) is configured to transmit the determined set of control limits to the trailer processing circuitry (102b), and the trailer processing circuitry (102b) is configured to receive the determined set of control limits, and to restrict at least one of propulsion and braking of the trailer in accordance with the transmitted determined set of control limits.

13. The computer system of any one of claim 12, wherein the trailer processing circuitry (102b) is further configured to determine a limitation or disruption in the digital communication between the towing vehicle and the trailer, and to control the trailer based on a currently selected set of control limits.

14. A vehicle combination (1) comprising a towing vehicle, a trailer having an electric drivetrain, and a computer system according to any one of the preceding claims.

15. A computer-implemented method (300) for controlling at least one trailer (5) in a vehicle combination (1), the vehicle combination comprising a towing vehicle (3) and the trailer, the trailer comprising an electric drivetrain (6), the method comprising:
- determining a longitudinal acceleration (a) of the vehicle combination over a given time period;
- determining, based on the determined longitudinal acceleration, an operational region of the vehicle combination, the operational region being one of a plurality of predefined operational regions (72, 74, 76), the plurality of predefined operational regions comprising: a steady-state operational region (72), in which the longitudinal acceleration is within a predefined threshold range (a72) centered around zero acceleration, a dynamic operational region (74), in which the longitudinal acceleration is outside the predefined threshold range, a transitional operational region (76), in which the longitudinal acceleration transitions between the steady-state operational region and the dynamic operational region;
- determining, based on the determined operational region, a set of control limits for controlling at least one of propulsion and braking of the trailer, the set of control limits comprising at least one of a set of power limits, a set of torque limits, and a set of force limits; and
- restricting at least one of propulsion and braking of the trailer in accordance with the determined set of control limits.

16. A computer program product comprising program code for performing, when executed by the one or more processing circuitry comprised in the computer system of any one of claims 1-14, the method of claim 15.
